# EUROPEAN PATENT APPLICATION

(11) **EP 3 223 253 A1**
(43) Date of publication of application: **27.09.2017**
(21) Application number: 16305325.9
(22) Date of filing: 23.03.2016
(51) Int. Cl.: G08B 21/04

(54) **MULTI-STAGE AUDIO ACTIVITY TRACKER BASED ON ACOUSTIC SCENE RECOGNITION**

(71) Applicant: Thomson Licensing, 92130 Issy-les-Moulineaux (FR)
(72) Inventor: GILBERTON, Philippe, 35576 Cesson-Sévigné (FR); DUONG, Quang Khanh Ngoc, 35576 Cesson-Sévigné (FR)
(74) Representative: Huchet, Anne

(57) **Abstract**

A method and apparatus for recognizing an activity of a monitored individual in an environment are described including receiving a first acoustic signal, performing audio feature extraction on the first acoustic signal in a first temporal window, classifying the first acoustic signal by determining a location of the monitored individual in the environment based on the extracted features of the first acoustic signal in the first temporal window, receiving a second audio signal, performing audio feature extraction of the second acoustic signal in a second temporal window and classifying the second acoustic signal by determining an activity of the monitored individual in the location in the environment based on the extracted features of the second acoustic signal in the second temporal window.

## Description

### FIELD

The proposed method and apparatus relates to human activity recognition and detection of anomalies in the behavior of monitored individuals living in restrictive environments. (1330)

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

For many years now, human activity detection and recognition has remained a popular topic. There are numerous application domains for which this is useful such as health care, elderly care, home security, and other restrictive environments such as prisons, juvenile detention centers, schools or individuals subject to house arrest. One of the ultimate goals of the monitoring system is to learn about people's habits and detect abnormal behaviors in order e.g. to notify medical staff or a close relative regarding the status of the monitored individual. This kind of service could have several advantages such as anticipating at a very early stage behavioral changes that would generate hospital cost savings, preventing residential burglaries or more simply making medical staff and/or relatives more reassured about their patients, relatives or real-estate assets.

Many different technologies are currently being experimented to monitor activity of individuals in restricted environments. The proposed method and apparatus focuses particularly on audio technology that is able to track daily activity of individuals at home using only microphone recordings. Many papers describe different methods of sound detection and classification, but most of them focus on the environmental sound scenes.

The proposed method and apparatus addresses the above identified issues and in advantageous implementations save CPU resources especially for portable device usage, extends battery life, adapts to activity recognition complexity, reduces time for processing responses for coarse activity detection and recognition and/or improves the accuracy of the fine activity detection and recognition.

### SUMMARY

A problem that is addressed by the proposed method and apparatus is that the audio recognition (classification) needs different processing means depending on the complexity of the activity that needs to be recognized. Typically CPU consumption and battery life could be real limitations to the deployment of such a service in portable devices. Additionally, many audio events are quite similar (such as sounds of opening the refrigerater and opening the entrance door) that significantly decrease the accuracy of the detection system.

In this respect, the present invention relates to a method as defined in claim 1 and to an apparatus as defined in claim 9.

An advantage of the proposed method and apparatus is to mitigate the above problems by a multi-level classification technique: a coarse event detection and classification (recognition) can be done first (and very quickly, with low processing requirement) to determine the location of the human activity (e.g. if he/she is in the kitchen, in the living room,...). Then a more fine-grained classification step is added to detect more specific actions (e.g., if the monitored individual opens the refrigerater in the kitchen or not,...).

The proposed method and apparatus provides a method of sound event detection and recognition (classification) that has a multi-resolution approach depending on which details of the activity are required to be recognized. For example, the method provides the ability to perform a coarse audio (acoustic signal) detection and recognition (like determining in which room of the house the monitored individual is performing the activity to be recognized or which high level activity the monitored individual is performing like cooking) at a first step and upon request to perform a finer audio (acoustic signal) recognition (like which type of appliances the monitored individual is using like the refrigerator, oven, dishwasher, etc....). An advantage of the proposed method and apparatus over other methods is that it consumes CPU resources according to the detail of the activity that the proposed method and apparatus is requested to recognize. Thus, the proposed method and apparatus saves CPU processing, battery life and advantageously decreases response time of the service. Moreover, the first coarse detection and recognition step will limit the number of activities in the second (fine grain) step so as to improve the final accuracy. As an example, if the algorithm knows that the action is in the kitchen (given from the first recognition (coarse) step) then it will limit the number of sounds to process that more likely originated only from the kitchen as microwave, opening/closing refrigerator door, running the water,... and not trying to distinguish between the sounds of the entrance door opening and refrigerator door opening (between which, it is very difficult, in general, to discriminate).

A method and corresponding apparatus for recognizing an activity of a monitored individual in an environment are described, the method including receiving a first acoustic signal, performing audio feature extraction on the first acoustic signal in a first temporal window, classifying the first acoustic signal by determining a location of the monitored individual in the environment based on the extracted features of the first acoustic signal in the first temporal window, receiving a second audio signal, performing audio feature extraction of the second acoustic signal in a second temporal window and classifying the second acoustic signal by determining an activity of the monitored individual in the location in the environment based on the extracted features of the second acoustic signal in the second temporal window.

### BRIEF DESCRIPTION OF THE DRAWINGS

The proposed method and apparatus is best understood from the following detailed description when read in conjunction with the accompanying drawings. The drawings include the following figures briefly described below:
Fig. 1 depicts a multi-room audio (acoustic signal) sensing infrastructure.
Fig. 2 depicts an exemplary general workflow of the proposed method and apparatus.
Fig. 3 is an example of the feature extraction pipeline.
Fig. 4 depicts an example of the proposed activity detection and recognition method and apparatus based on coarse and fine classifiers.
Fig. 5 is a flowchart of an embodiment of a coarse/fine classifier selector.
Fig. 6 is a flowchart of an embodiment of the overview of the proposed method.
Fig. 7 is a flowchart of an embodiment of the training phase of the proposed method shown in Fig. 6.
Fig. 8 is a flowchart of an embodiment of the coarse activity classification of the training phase of the proposed method shown in Fig. 7.
Fig. 9 is a flowchart of an embodiment of the fine (detailed) activity classification of the training phase of the proposed method shown in Fig. 7.
Fig. 10 is a flowchart of an embodiment of the coarse detection and classification (recognition) phase of the proposed method shown in Fig. 6.
Fig. 11 is a flowchart of an embodiment of the fine (detailed) classification (recognition) phase of the proposed method shown in Fig. 6.
Fig. 12 is a flowchart of an embodiment of the feature extraction portion of the various phases of the proposed method.
Fig. 13 is a block diagram of an embodiment of the proposed apparatus.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any appropriate means that can provide those functionalities are covered by the "means for" feature.

For the clarity of the explanation of the proposed method and apparatus, it will rely on a use case example that could be applied to an elderly care service. The proposed method and apparatus is not limited to an elder care environment but more generally is preferably directed to a restrictive environment.

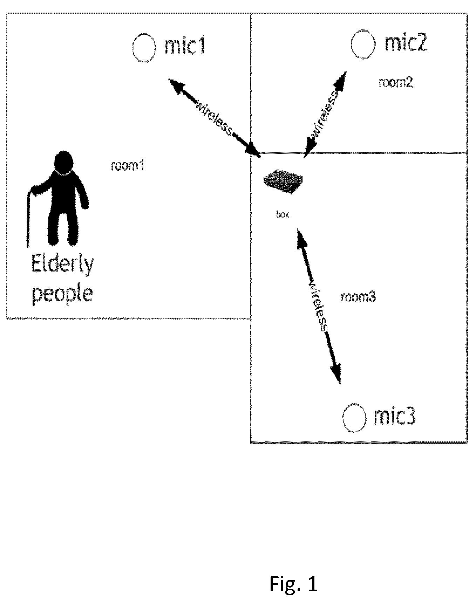

The elderly care service proposed as an example of usage of the proposed method and apparatus is based on collecting data from different sensors to learn about the habits of an elderly individual (monitored individual) and notify dedicated medical staff or a close relative about detected behavior anomalies or a shift in the habits of the monitored individual. To maximize acceptance by the monitored individual, no sensor is required to be worn by the monitored individual. That being said, one of the most relevant ways to monitor the activity is to use acoustical sensors (i.e., microphones). Privacy, which is outside of the scope of the proposed method and apparatus, will be preserved in collecting temporal, spectral or combination of both fragments of audio (acoustic) signals. The signals would be encrypted for even better privacy preservation. An infrastructure can be imagined that would require one microphone per room as presented in Fig. 1, for example.

The three microphones could be connected wirelessly to a box connected to the RGW (Residential Gateway) of the home network. Many other ways to connect the microphones to a centralized device can be used like Programmable Logic Controller (PLC) technology. Alternatively, the box functionality could be integrated in the RGW, which allows the microphones to have a direct connection to the RGW. In another embodiment, arrays of microphones can also be used in each room so as to be able to additionally take into account information about the spatial location of the sound events (i.e., spatial feature such as interchannel intensitive differences (IID) and interchannel phase differences (IPD) can be extracted in addition to the spectral feature (such as MFCC - Mel-Frequency Cepstral Coefficients) so as to form a final, more robust audio feature for classification). As an example, the locations of refrigerator, dishwasher, etc. are usually fixed so if recorded sound is detected coming from that direction (by spatial feature), it is more likely generated from these devices. Examples of the combination of the spatial information (only when using microphone array) and spectral information of the sound event can be found in the prior art.(i.e.: an example of combination of spatial and spectral information described in this paper "A Microphone Array System for Automatic Fall Detection", IEEE TRANSACTIONS ON BIOMEDICAL ENGINEERING, VOL. 59, NO. 2, MAY 2012)

Examples of the types of rooms that would be relevant to monitor in the context of the proposed use case are the kitchen, the bedroom, the living room and the bathroom.

Then an exemplary list of activities based on type of sound to be recognized could be the following assuming that the room being monitored is equipped with at least one microphone or an array of microphones:
- Time spent per room under monitoring
- Toilet duration within the bathroom on a daily basis
- Sleeping time within the bedroom
- Time spent listening TV or Radio programs
- Cooking time
- Etc...

The above activities can be considered high level activities because no detail within each of them is displayed. To perform such coarse acoustical activity detection and recognition, an efficient approach in terms of processing resources is to use a classifier that runs its algorithm over a long audio (acoustic signal) time (temporal) window such as 5 seconds to several minutes instead of short audio (acoustic signal) frames like 10-40 milliseconds.

If finer activity level classification is required another exemplary list that can be considered as sub-activities of high level activities could be the following:
- Time spent per room equipped with the microphone
   o Alone, or with other people (i.e.: social activity monitoring)
- Toilet duration within the bathroom on a daily basis
   ∘ Duration or number of showers per week (i.e.: to detect hygiene declination or physical disabilities)
- Sleeping time within the bedroom
   ∘ Snoring, sleeping apnea
- Time spent listening TV or Radio programs
   ∘ Type of TV program or radio (listen less music than usual...)
- Cooking time
   ∘ Refrigerator, oven or microwave oven usage, handmade cooking time, dish washer filling or emptying, etc...

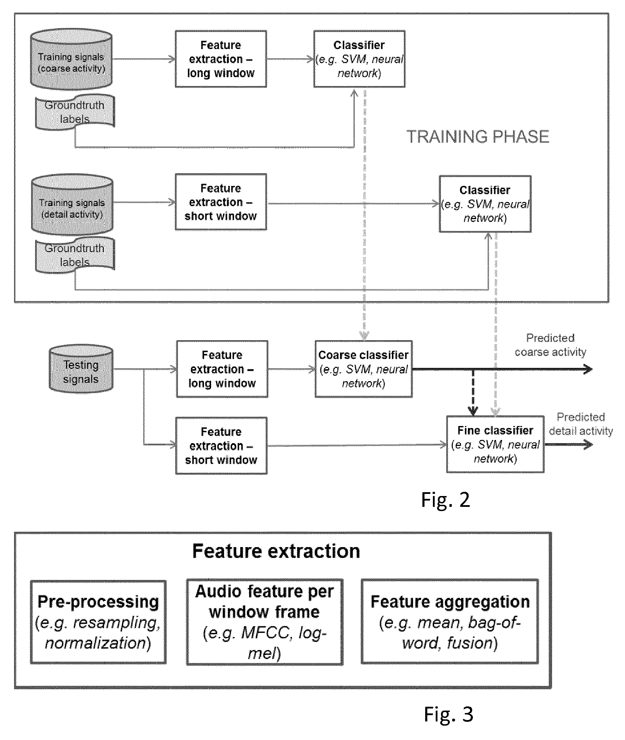

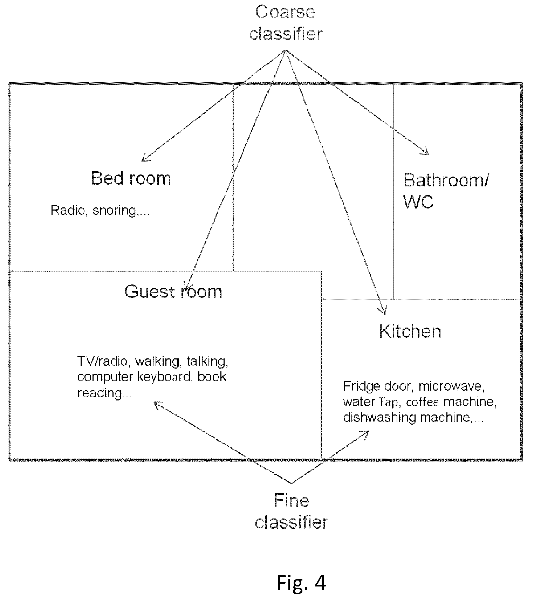

The generic audio (acoustic signal) processing tool workflow that would perform such audio (acoustic signal) recognition is presented in Figs. 2 and 3, while an example of activity is given in Fig. 4:
In the training phase, two activity classifiers are trained based on the coarse activity with audio features extracted from a long time segment (window) and detail (fine) activity with audio features extracted from short time windows (segments). The feature extraction pipeline (e.g. as shown in Fig. 2) can be used where, for example, the features in the long time segment (window) for the first classifier can be the average or where the histogram (bag-of-feature-words) of the features in short windows within the segment (it is done in the feature aggregation step in Fig. 2) are considered. State-of-the-art of classifiers such as Support Vector Machines (SVMs), neural networks and the like can be used as well. The proposed method and apparatus exploit two classifiers in parallel in order to perform multi-resolution recognition.

In the detection and classification phase, given the audio (acoustic signal) recording from microphones, coarse activities are first detected and recognized (classified) by the coarse classifier operating on audio (acoustic) signals in a long time window (e.g., during 5 minutes from 12 PM to 12:05 PM, user is doing cooking in the kitchen). Then detection and classification of more detailed activities is performed, which are limited by the given context as a result of the coarse detection and classification. This is possible since the proposed method and apparatus has already detected and classified the activity location (e.g., bathroom, kitchen, bedroom, living room). Thus a finer classification can be made by the fine classifier (e.g., if the fridge door is opened) in a much smaller window (segment) time since those types of activity are usually short. Note that the fine classifier can reduce false detection compared to the case it is used alone since the number of specific activities now is limited by context (activity location determined by the coarse detection and classification portion of the proposed method and apparatus). For example, if in the coarse detection and recognition step it is determined that the user is in in the kitchen, then the sound of opening the fridge door is not confused with the sound of opening the entrance door. Thus, using a two tiered detection and classification scheme as proposed herein, limits the scope of the search (detection and classification) of the fine classifier that will, thus, converge more quickly to the targeted result.

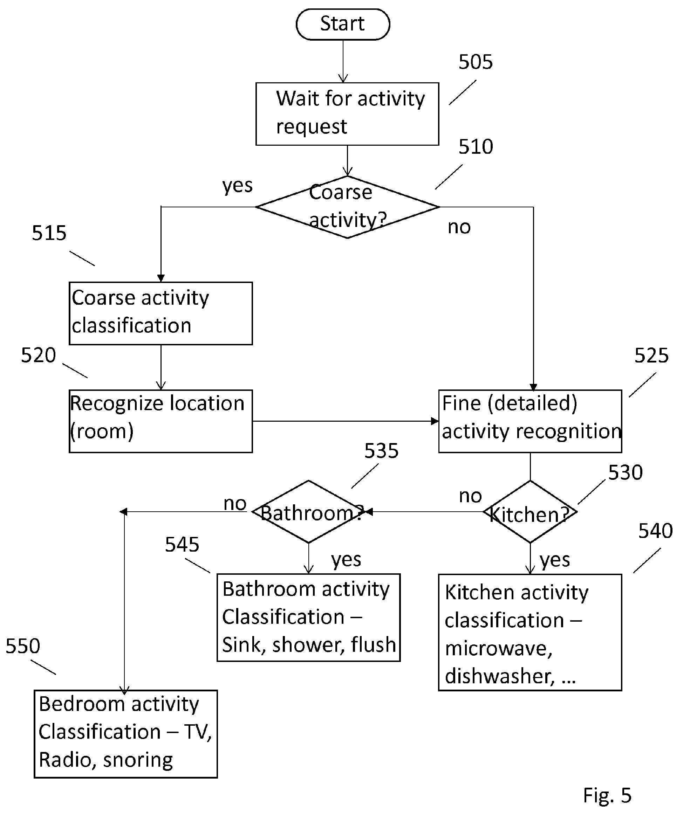

Fig. 5 presents a flowchart of an exemplary embodiment of the proposed method and apparatus that performs the selection between coarse and fine classifiers according to the level of activity recognition that is requested by the end user (medical staff, relatives, etc...). The end user is the person or entity that is monitoring the activity of an individual in a restricted environment. The proposed method and apparatus may receive requests for detection and recognition (classification) of a current activity of the monitored individual or may proceed to detect and recognize the behavior of the monitored individual and alert the end user of anomalous behavior. Fig. 5 represents the case where the end user requests detection and classification of the monitored individual's current activity. At 505 the proposed method and apparatus is waiting for a request from an end user regarding current activity. At 510 a test is performed to determine if coarse activity detection and recognition of the current activity is requested. That is, the end user only wants to know what room the monitored individual is in or if the monitored individual is at home at all. If coarse activity is not requested, it can be assumed that fine (detailed) activity recognition is being requested. If coarse activity detection and recognition is being requested then coarse activity classification is performed at 515. On the assumption that the monitored individual is at home then at 520 the room location of the monitored individual is determined. The proposed method and apparatus then automatically moves to fine (detailed) activity recognition of the monitored individual at 525. If coarse activity detection and recognition is not being requested then processing proceeds to 525. At 525 fine (detailed) activity recognition is performed. At 530 a test is preformed to determine if the monitored individual is in the kitchen. If the monitored individual is in the kitchen then at 540 kitchen activity classification is performed including determining if the monitored individual is opening/closing the refrigerator door, operating the microwave, running water at the sink, operating the dishwasher (loading, unloading, running), cooking on the range, etc. If the monitored individual is not in the kitchen then at 535 a test is performed to determine if the monitored individual is in the bathroom. If the monitored individual is in the bathroom then at 545 bathroom activity classification is performed including determine if the monitored individual is taking a shower, flushing the toilet or washing up/brushing teeth at the sink, etc. If the monitored individual is not in the bathroom then it may be assumed that the monitored individual is in the bedroom and at 550 bedroom activity classification is performed including determining if the monitored individual is watching TV, listening to the radio, snoring, etc. It can be assumed that other tests are performed for each room in the residence including the living room, a guest room (guest bedroom), etc. with the proposed method and apparatus tailored to the monitored individual's residence. At the conclusion of the fine (detailed) activity classification the end user is notified of the activity classification of the current activity of the monitored individual. This is not shown on Fig. 5. It may be noted here that since the monitored individual is not wearing any sort of monitoring device, the activity classification determines the activity of an individual in the residence. The individual in the residence may not be the monitored individual but may be a care giver (worker), nurse, doctor, or intruder.

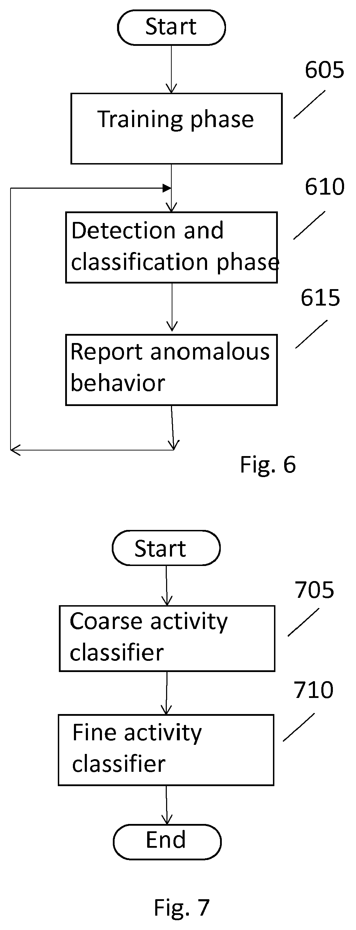

Fig. 6 is a flowchart of an embodiment of the overview of the proposed method. At 605 the training phase of the proposed method and apparatus is performed. The training phase includes both coarse and fine (detailed) activity training. At 610 the detection and recognition (classification) phase of the proposed method and apparatus is performed. The detection and recognition (classification) phase includes both coarse and fine (detailed) activity classification. At 615 any anomalous behavior detected and recognized is reported to the end user (person or entity monitoring the individual in the restricted environment).

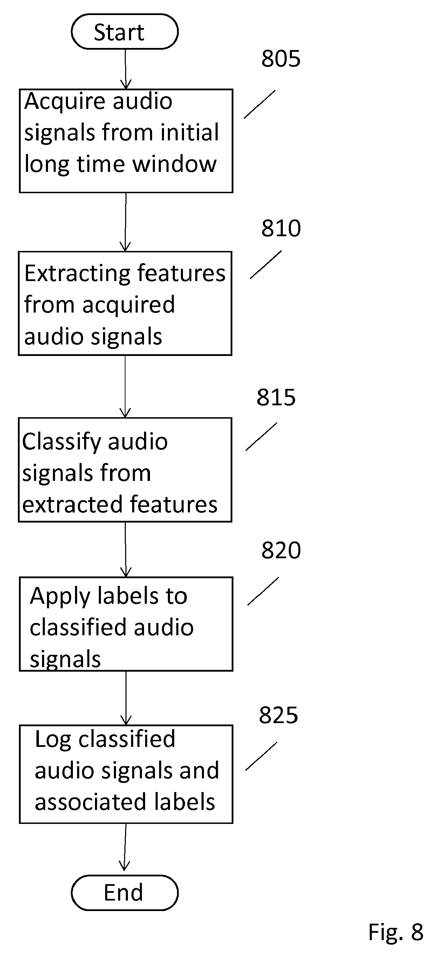

Fig. 7 is a flowchart of an embodiment of the training phase of the proposed method shown in Fig. 6. The training phase shown in Fig. 6 is further broken down in Fig. 7. There are two training activities - coarse activity training at 705 and fine (detailed) activity training at 710. When training phase 605 is invoked (performed) then coarse activity training is performed at 705 followed by fine (detailed) activity training. Fig. 8 is a flowchart of an embodiment of the coarse activity classification of the training phase of the proposed method shown in Fig. 7. The coarse activity training of 705 is further broken down in Fig. 8. In order for there to be coarse activity training it is necessary to acquire audio (acoustic) signal(s) from an initial long time window at 805. The initial long time window is on the order of 5 minutes. At 810 the features of the audio signal(s) are extracted. At 815 the audio (acoustic) signal(s) are classified using the extracted features. Ground truth labels are associated with and applied to the classified audio (acoustic) signal(s) at 820. The classified audio (acoustic) signal(s) and their associated ground truth labels are logged (stored, recorded) at 825. Specifically, logging signals or data is the recordation (storing or "logging") of the signals or data in a file (database) in a computer or processor.

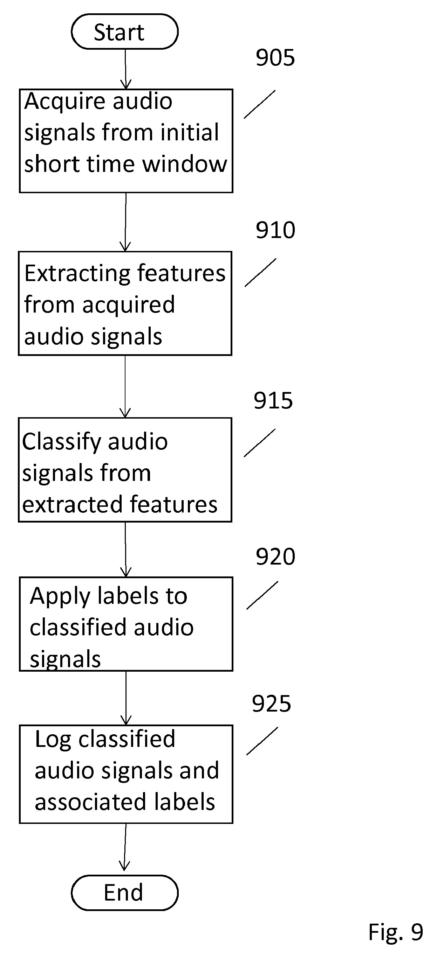

Fig. 9 is a flowchart of an embodiment of the fine (detailed) activity classification of the training phase of the proposed method shown in Fig. 7. The fine (detailed) activity of 710 is further broken down in Fig. 9. In order for there to be fine (detailed) activity training it is necessary to acquire audio (acoustic) signal(s) from an initial short time window at 905. The initial short time window is on the order of 10-40 milliseconds. At 910 the features of the audio (acoustic) signal(s) are extracted. At 915 the audio (acoustic) signal(s) are classified using the extracted features. Ground truth labels are applied to the classified audio (acoustic) signal(s) at 920. The classified audio (acoustic) signal(s) and their associated ground truth labels are logged (stored, recorded) at 925.

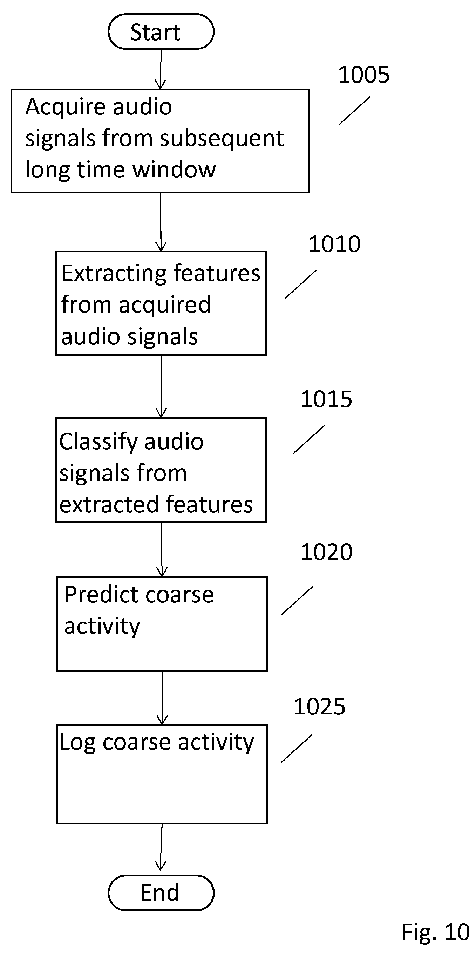

Fig. 10 is a flowchart of an embodiment of the coarse detection and classification (recognition) phase of the proposed method shown in Fig. 6. The coarse activity detection and recognition (classification) of 610 is further broken down in Fig. 10. In order for there to be coarse activity detection and recognition (classification) it is necessary to acquire audio (acoustic) signal(s) from a subsequent long time window at 1005. The subsequent long time window is on the order of 5 minutes. At 1010 the features of the audio (acoustic) signal(s) are extracted. At 1015 the audio (acoustic) signal(s) are classified using the extracted features. At 1020 the proposed method and apparatus predict the coarse activity based on matching the audio (acoustic) signal(s) acquired during the coarse detection and recognition phase to labeled coarse activities from the coarse activity training. The labels associated with the coarse activity from the coarse activity log (database in storage) are retrieved. The classified audio (acoustic) signal(s) and their associated labels are logged (stored, recorded) at 1025.

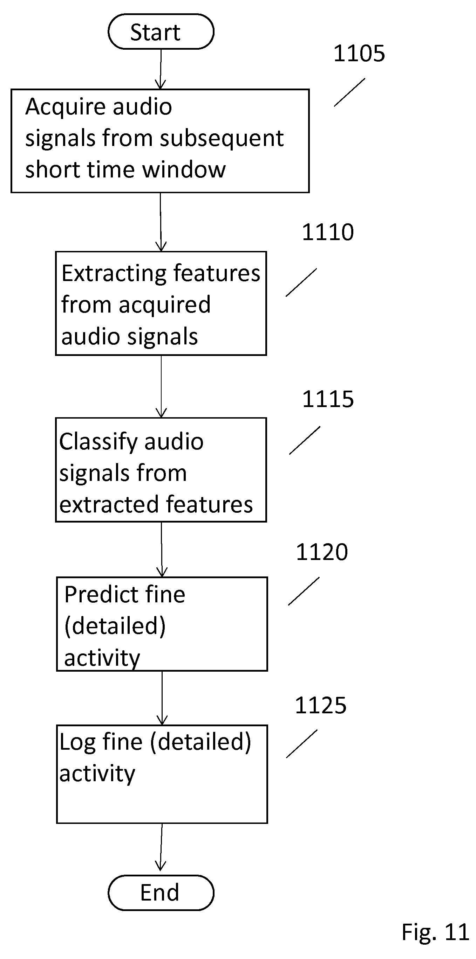

Fig. 11 is a flowchart of an embodiment of the fine (detailed) classification (recognition) phase of the proposed method shown in Fig. 6. The fine (detailed) activity of 610 is further broken down in Fig. 11. In order for there to be fine (detailed) activity training it is necessary to acquire audio (acoustic) signal(s) from a subsequent short time window at 1105. The subsequent short time window is on the order of 10-40 milliseconds. At 1110 the features of the audio (acoustic) signal(s) are extracted. At 1115 the audio (acoustic) signal(s) are classified using the extracted features. At 1120 the proposed method and apparatus predicts the fine (detailed) activity based on matching the audio (acoustic) signal(s) acquired during the fine (detailed) recognition phase to labeled fine (detailed) activities from the fine (detailed) activity training. The labels associated with the fine (detailed) activity from the fine (detailed) activity log (database in storage) are retrieved. The classified audio (acoustic) signal(s) and their associated labels are logged (stored, recorded) at 1125. The fine (detailed) activity classification is tiered or implemented using the equivalent of a CASE statement as shown in Fig. 5.

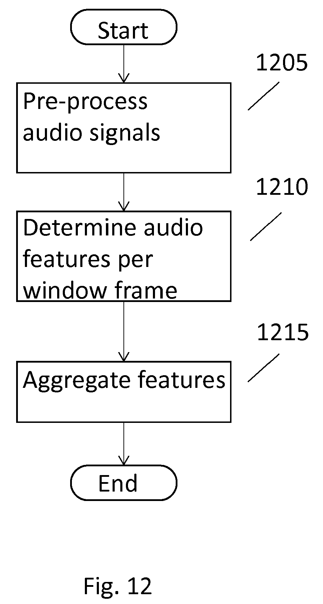

Fig. 12 is a flowchart of an embodiment of the feature extraction portion of the various phases of the proposed method. Feature extraction is further broken down into steps (acts). At 1205 the audio (acoustic) signal(s) are pre-processed. This includes re-sampling, filtering, normalization, de-noising etc. Next, at 1210 the audio features per window frame are determined. This may involve Mel-Frequency Cepstral Coefficients (MFCCs) and log-mels spectrum, or deep neural network (DNN) based feature (i.e., feature extracted from some layers of an DNN learned from an audio database). Finally, at 1215 the features are aggregated. This step (act) may involve mean, bag-of-words and/or fusion

According to Wikipedia, in sound processing, the mel-frequency cepstrum (MFC) is a representation of the short-term power spectrum of a sound, based on a linear cosine transform of a log power spectrum on a nonlinear mel scale of frequency. Mel-frequency cepstral coefficients (MFCCs) are coefficients that collectively make up an MFC. MFCCs are derived from a type of cepstral representation of the audio clip (a nonlinear "spectrum-of-a-spectrum"). It is possible to raise log-mel-amplitudes to a suitable power (around 2 or 3) before taking the DCT (Discrete Cosine Transform), which reduces the influence of low-energy components.

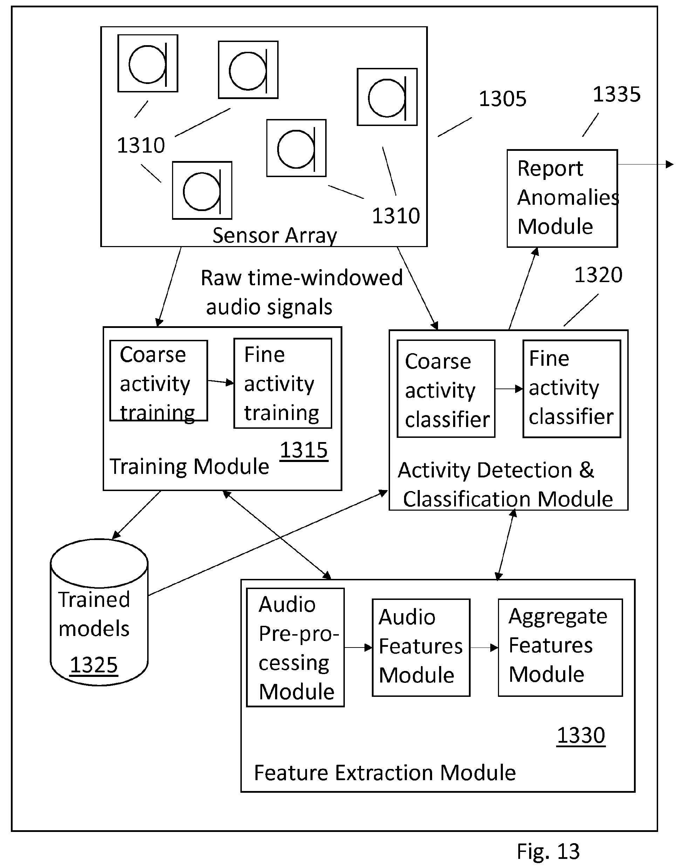

Fig. 13 is a block diagram of an embodiment of the proposed apparatus. An array of sensors 1305 includes one or more sensors 1310. Initial raw time windowed audio (acoustic) signals are provided to the training module 1315. The training module performs coarse activity training and fine activity training and logs (stores, records) the trained models (classifiers) in module 1325. In order to perform either or both coarse and fine activity training (training module 1315) the feature extraction module 1330 is accessed (bi-directional communication with the training module). The feature extraction module includes an audio (acoustic) pre-processing module, an audio features module and an aggregate features module. Once training (coarse and fine) has been completed, new (subsequent) raw time-windowed audio (acoustic) signals are forwarded to the activity detection and classification module 1320 for classification. Example of coarse activity time windows are on the order of five (5) minutes and the fine activity time windows are on the order of hundreds of milliseconds to several seconds. Fine (detailed) activity training and fine activity classification are tiered as shown in Fig. 5. The activity detection and classification module uses the trained models to classify the activities from acquired audio (acoustic) signals. In order to perform either or both coarse and fine activity recognition (classification) the feature extraction module is accessed (bi-directional communication with the activity detection and classification module). If the activity detection and classification module classifies an audio (acoustic) signal as an abnormal activity (i.e.: human fall, lunch/dinner missing), the activity detection and classification module reports the anomalous behavior to the report anomalies module 1335, which notifies the designated care giver or medical staff. It should be noted that there may be an additional module (not shown) to interface with an end user to accept requests to detect and classify current behavior and report the current behavior to the end user. Both the report anomalies module and this additional module, which is not shown may operate directly to interface with the end user, care givers, medical staff etc. or may operate through a communications interface module (also not shown).

As a variant of the infrastructure presented in Fig. 1 that would perform the audio (acoustic signal) recognition in one device (for example, the RGW), it could be suitable to distribute the coarse classification process in a smartphone as it would consume less CPU processing and performing the fine classification process in the RGW or on a cloud service provider.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

## Claims

1. A method for recognizing an activity of a monitored individual in an environment, said method comprising:
receiving (1005) a first acoustic signal;
performing (1010) audio feature extraction on said first acoustic signal in a first temporal window;
classifying (1015) said first acoustic signal by determining a location of said monitored individual in said environment based on said extracted features of said first acoustic signal in said first temporal window;
receiving (1105) a second audio signal;
performing (1110) audio feature extraction of said second acoustic signal in a second temporal window; and
classifying (1115) said second acoustic signal by determining an activity of said monitored individual in said location in said environment based on said extracted features of said second acoustic signal in said second temporal window.

2. The method according to claim 1, further comprising:
performing (605) training of an acoustic signal classifier, wherein training said acoustic signal classifier includes:
receiving (805) a third acoustic signal;
performing (810) audio feature extraction on said third acoustic signal in a third temporal window;
classifying (815) said third acoustic signal by determining a location of said monitored individual in said environment based on said extracted features of said third acoustic signal in said third temporal window;
receiving (905) a fourth acoustic signal;
performing (910) audio feature extraction of said fourth acoustic signal in a fourth temporal window; and
classifying (915) said fourth acoustic signal by determining an activity of said monitored individual in said location in said environment based on said extracted features of said fourth acoustic signal in said fourth temporal window.

3. The method according to claim 2, further comprising:
associating (820) labels with and applying said associated label to said classified third acoustic signal; and
logging (825) said classified third acoustic signal and said associated labels.

4. The method according to claim 2, further comprising:
associating (920) labels with and applying said associated label to said classified fourth acoustic signal; and
logging (925) said classified fourth acoustic signal and said associated labels.

5. The method according to claim 1, further comprising:
detecting (610) anomalous behavior of said monitored individual in said location in said environment; and
reporting (615) said anomalous behavior to a user, wherein said user is a care giver, wherein said care giver, is a health care worker or family member.

6. The method according to claim 3, wherein said classifying said first acoustic signal further comprises:
predicting (1020) a coarse activity based on matching said first acoustic signal to said classified third acoustic signal and labels associated with and applied to said third acoustic signal; and
logging (1025) said coarse activity.

7. The method according to claim 4, wherein classifying said second acoustic signal further comprises:
predicting (1120) a fine activity based on matching said second acoustic signal to said classified fourth acoustic signal and labels associated with and applied to said fourth acoustic signal; and
logging (1125) said fine activity.

8. The method according to claim 2, wherein performing feature extraction on any of said first acoustic signal, said second acoustic signal, said third acoustic signal or said fourth acoustic signal includes pre-processing said first acoustic signal, said second acoustic signal, said third acoustic signal and said fourth acoustic signal, wherein pre-processing includes re-sampling, filtering, normalization and de-noising and said audio features of said first acoustic signal, said second acoustic signal, said third acoustic signal and said fourth acoustic signal in their respective temporal windows includes Mel-Frequency Cepstral Coefficients and log-mels spectrum or deep neural network based features.

9. An apparatus for recognizing an activity of a monitored individual in an environment, comprising:
means for receiving (1310) a first acoustic signal;
means for performing audio feature extraction (1330) on said first acoustic signal in a first temporal window;
means for classifying (1320) said first acoustic signal by determining a location of said monitored individual in said environment based on said extracted features of said first acoustic signal in said first temporal window;
means for receiving (1310) a second audio signal;
means for performing audio feature extraction (1330) of said second acoustic signal in a second temporal window; and
means for classifying (1320) said second acoustic signal by determining an activity of said monitored individual in said location in said environment based on said extracted features of said second acoustic signal in said second temporal window.

10. The apparatus according to claim 9, further comprising:
means for performing training (1315) of an acoustic signal classifier, wherein training said acoustic signal classifier includes:
means for receiving (1310) a third acoustic signal;
means for performing audio feature extraction (1330) on said third acoustic signal in a third temporal window;
means for classifying said third acoustic signal (1320) by determining a location of said monitored individual in said environment based on said extracted features of said third acoustic signal in said third temporal window;
means for receiving (1310) a fourth acoustic signal;
means for performing audio feature extraction (1330) of said fourth acoustic signal in a fourth temporal window; and
means for classifying said fourth acoustic signal (1320) by determining an activity of said monitored individual in said location in said environment based on said extracted features of said fourth acoustic signal in said fourth temporal window.

11. The apparatus according to claim 10, further comprising:
means for associating labels with and applying said associated label (1315) to said classified third acoustic signal; and
means for logging (1315) said classified third acoustic signal and said associated labels.

12. The apparatus according to claim 10, further comprising:
means for associating labels with and applying said associated label to (1315) said classified fourth acoustic signal; and
means for logging (1315) said classified fourth acoustic signal and said associated labels.

13. The apparatus according to claim 9, further comprising:
means for detecting anomalous behavior (1320) of said monitored individual in said location in said environment; and
means for reporting (1335) said anomalous behavior to a user, wherein said user is a care giver, wherein said care giver, is a heath care worker or family member.

14. The apparatus according to claim 11, wherein said classifying said first acoustic signal further comprises:
means for predicting a coarse activity (1320) based on matching said first acoustic signal to said classified third acoustic signal and labels associated with and applied to said third acoustic signal; and
means for logging (1320) said coarse activity.

15. The apparatus according to claim 12, wherein classifying said second acoustic signal further comprises:
means for predicting a fine activity (1320) based on matching said second acoustic signal to said classified fourth acoustic signal and labels associated with and applied to said fourth acoustic signal; and
means for logging (1320) said fine activity.
